# EUROPÄISCHE PATENTSCHRIFT

(11) **EP 0 934 368 B1**
(45) Veröffentlichungstag und Bekanntmachung des Hinweises auf die Patenterteilung: **13.03.2002**
(21) Anmeldenummer: 97945819.7
(22) Anmeldetag: 13.10.1997
(51) Int. Cl.: C09D 5/16

(54) **ANTIFOULINGBESCHICHTUNG**
ANTIFOULING PAINT
PEINTURE ANTISALISSURE

(30) Priorität: 24.10.1996 DE 19644224
(43) Veröffentlichungstag der Anmeldung: 11.08.1999
(73) Patentinhaber: BAYER AG, 51368 Leverkusen (DE)
(72) Erfinder: PODSZUN, Wolfgang, D-51061 Köln (DE); MECHTEL, Markus, D-50937 Köln (DE); KAESLER, Karl-Heinz, D-51467 Bergisch Gladbach (DE)
(86) Internationale Anmeldenummer: EP9705627
(87) Internationale Veröffentlichungsnummer: WO9817733

(56) Entgegenhaltungen:
- EP-A- 0 328 335
- EP-A- 0 679 333
- CHEMICAL ABSTRACTS, vol. 84, no. 12, 22.März 1976 Columbus, Ohio, US; abstract no. 75808n, "ANTIFOULING PAINTS FOR SHIPS BOTTOMS" XP002052505

## Beschreibung

Die Erfindung betrifft ein Verfahren zur Herstellung von Antifoulingmitteln auf Basis von mikroverkapselten schwermetallfreien Bioziden.

Antifoulingbeschichtungen zur Verhinderung von Bewüchsen aus Algen, Seepocken, Röhrenwürmern, Muscheln oder anderen Meeresorganismen an der Oberfläche von Gegenständen, die mit See- oder Brackwasser in Kontakt kommen, werden seit langem angewendet. Die Bewuchsbildung stellt insbesondere bei Schiffen ein großes Problem dar, da der Reibungswiderstand erhöht wird und infolge des gesteigerten Energieverbrauchs und häufigen Trockendockaufenthalten die Betriebskosten deutlich gesteigert werden.

Man kann zwischen biozidhaltigen und biozidfreien Antifoulingbeschichtungen unterscheiden. Biozidfreie Antifoulingbeschichtungen besitzen Antihafteigenschaften, die das Festsetzen von Meeresorganismen verhindern sollen. Die Wirksamkeit der bisherigen biozidfreien Antifoulingbeschichtungen ist jedoch begrenzt, so daß eine mechanische Reinigung des Schiffsrumpfes oder der Unterwasserkonstruktion in relativ kurzen Zeiträumen notwendig wird. Besser wirksam sind Antifoulingbeschichtung die Biozide enthalten, die die bewuchsbildenden Organismen abtöten. Übliche Antifoulingbiozide sind organische Zinnverbindungen. Auch Kupfer- Antimon und Wismutverbindungen wurden vorgeschlagen; diese sind allerdings weniger wirksam. Der Nachtteil der bisherigen biozidhaltigen Antifoulingbeschichtungen ist ihre geringe Umweltvertäglichkeit. Besonders problematisch sind schwermetallhalige Antifoulingbiozide, da diese eine Kontamination des Seewassers und des Seebodens, insbesondere im Bereich von Häfen verursachen.

Im Unterschied zu diesen schwermetallhaltigen Bioziden weisen schwermetallfreie Biozide, die im allgemeinen weniger ökotoxisch sind, da sie häufig im Meerwasser zu nichttoxischen Metaboliten abgebaut werden können, keine gute Langzeitwirkung auf, da der Wirkstoff offensichtlich bereits in der Beschichtung vorzeitig abgebaut wird.

Die Aufgabe der vorliegenden Erfindung ist die Bereitstellung eines Verfahrens zur Herstellung einer hochwirksamen Antifoulingbeschichtung mit guter Langzeitwirkung und verbesserter Umweltverträglichkeit.

Es wurde nun gefunden, daß Antifoulingbeschichtungen mit schwermetallfreien Bioziden eine verbesserte Langzeitwirkung aufweisen, wenn das Biozid in mikroverkapselter Form vorliegt.

Gegenstand der Erfindung ist also ein Verfahren zur Herstellung von Antifoulingmitteln, dadurch gekennzeichnet sind, dass die durch Perlpolymerisation erhaltenen Mikroverkapselten, schwermetallfreien Biozide mit Filmbildnem dispergiert werden und gegebenenfalls mit üblichen Hilfsmitteln versetzt werden.

Als Biozide eignen sich vorzugsweise schwermetallfreie Algizide, Fungizide, Insektizide, Molluskizide und Bakterizide.

### Triazole:

Azaconazole, Bromuconazole, Cyproconazole, Dichlobutrazol, Diniconazole, Hexconazole, Metconazole, Penconazole, Propiconazole, Tebuconazole, Amitrole, Azocyclotin, Epoxyconazole, Bitertanol, Difenoconazole, Fenbuconazole, Fenchlorazole, Fenethanil, Fluquinconazole, Flusilazole, Flutriafol, Imibenconazole, Isozofos, Myclobutanil, Paclobutrazol, (±)-cis-1-(4-Chlorphenyl)-2-(lH-1,2,4-triazol-1-yl)-cycloheptanol, Tetraconazole, Triadimefon, Triadimenol, Triapenthenol, Triflumizole, Triticonazole, Uniconazole sowie deren Metallsalze und Säureaddukte.

### Imidazole:

Imazalil, Pefurazoate, Prochloraz, Triflumizole.

Thiazolcarboxanilide wie 2',6'-Dibromo-2-methyl-4-trifluoromethoxy-4'-trifluoromethyl-1,3-thiazole-5-carboxanilide sowie deren Metallsalze und Säureaddukte.

### Succinat-Dehydrogenase Inhibitoren wie:

Fenfuram, Furcarbanil, Cyclafluramid, Furmecyclox, Seedvax, Metsulfovax, Pyrocarbolid, Oxycarboxin, Shirlan, Mebenil (Mepronil), Benodanil, Flutolanil (Moncut);

### Naphthalin-Derivate wie:

Terbinafine, Naftifine, Butenafine;
Sulfenamide wie Dichlofluanid, Tolylfluanid, Folpet, Fluorfolpet; Captan, Captofol;
Benzimidazole wie Carbendazim, Benomyl, Furathiocarb, Fuberidazole, Thiophonatmethyl, Thiabendazole oder deren Salze;
Morpholinderivate wie Tridemorph, Fenpropimorph, Falimorph, Dimethomorph, Dodemorph; Aldimorph, Fenpropidin und ihre arylsulfonsauren Salze, wie z.B. p-Toluolsulfonsäure und p-Dodecylphenyl-sulfonsäure;

### Dithiocarbamate, Cufraneb, Ferbam, Mancopper, Mancozeb, Maneb, Metam, Metiram, Thiram Zeneb, Ziram:

Benzthiazole wie 2-Mercaptobenzothiazol;
   Benzamide wie 2,6-Dichloro-N-(4-trifluoromethylbenzyl)-benzamide;
   Borverbindungen wie Borsäure, Borsäureester, Borax;
Formaldehyd und Formaldehydabspaltende Verbindungen wie Benzylalkoholmono-(poly)-hemiformal, Oxazolidine, Hexa-hydro-S-triazine, N-Methylolchloracetamid, Paraformadehyd, Nitropyrin, Oxolinsäure, Tecloftalam;
Tris-N-(cyclohexyldiazeniumdioxy)-aluminium, N-(Cyclo-hexyldiazeniumdioxy)-tributyl, K-Salze;
N-Methylisothiazolin-3-on, 5-Chlor-N-methylisothiazolin-3-on, 4,5-Dichloro-N-octylisothiazolin-3-on, N-Octyl-isothiazolin-3-on, 4,5-Trimethylen-isothiazolinone, 4,5-Benzi sothi azolinone;
Aldehyde wie Zimtaldehyd, Formaldehyd, Glutardialdehyd, β-Bromzimtaldehyd; Thiocyanate wie Thiocyanatomethylthiobenzothiazol, Methylenbisthiocyanat, usw;
quartäre Ammoniumverbindungen wie Benzyldimethyltetradecylammoniumchlorid, Benzyldimethyldodecylammoniumchlorid, Didecyldimethylammoniumchlorid;
Iodderivate wie Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-butylhamstoff, 3-Iod-2-propinyl-n-hexylcarbamat, 3-Iod-2-propinyl-cyclohexylcarbamat, 3-Iod-2-propinyl-phenylcarbamat;
Phenolderivate wie Tribromphenol, Tetrachlorphenol, 3-Methyl-4-chlorphenol, 3,5-Dimethyl-4-chlorphenol, Phenoxyethanol, Dichlorphen, o-Phenylphenol, m-Phenylphenol, p-Phenylphenol, 2-Benzyl-4-chlorphenol und deren Alkali- und Erdalkalimetallsalze.
Mikrobizide mit aktivierter Halogengruppe wie Chloracetamid, N-Methylolchloracetamid, Bronopol, Bronidox, Tectamer wie 2-Brom-2-nitro-1,3-propandiol, 2-Brom-4'-hydroxy-acetophenon, 2,2-Dibrom-3-nitril-propionamid, 1,2-Dibrom-2,4-dicyanobutan, β-Brom-β-nitrostyrol;
Pyridine wie 1-Hydroxy-2-pyridinthion (und ihre Na-, Fe-, Cu-, Mn-, Zn-Salze), Tetrachlor-4-methylsulfonylpyridin, Pyrimethanol, Mepanipyrim, Dipyrithion;
Dialkyldithiocarbamate wie Na-Salze von Dialkyldithiocarbamaten, Tetramethylthiuramdisulfid, Kalium-N-methyl-dithiocarbamat;
Nitrile wie 2,4,5,6-Tetrachlorisophthalodinitril, Dinatrium-cyano-dithioimidocarbamat;
Chinoline wie 8-Hydroxychinolin und deren Cu-Salze;
Mucochlorsäure, 5-Hydroxy-2(5H)-furanon;
4,5-Dichlorodithiazolinon, 4,5-Benzdithiazolinon, 4,5-Trimethylendithiazolinon, 4,5-Dichlor-(3H)-1,2-dithiol-3-on, 3,5-Dimethyl-tetrahydro-1,3,5-thiadiazin-2-thion,
N-(2-p-Chlorbenzoylethyl)-hexaminiumchlorid, Kalium-N-hydroxymethyl-N'-methyl-dithiocarbamat,
2-Oxo-2-(4-hydroxy-phenyl)acethydroximsäure-chlorid,
Phenyl-(2-chlor-cyan-vinyl)sulfon,
Phenyl-(1,2-dichlor-2-cyan-vinyl)sulfon;

Desweiteren werden auch gut wirksame Mittel mit den folgenden Wirkstoffen hergestellt:

### Fungizide:

Methyl-(E)-methoximino[α-(o-tolyloxy)-o-tolyl]acetate,Methyl-(E)-2-{2-[6-(2-cyanphenoxy)-pyrimidin-4-yl-oxy]phenyl}-3-methoxyacrylat,
Acypetacs, 2-Aminobutane, Ampropylfos, Anilazine, Benalaxyl, Bupirimate, Chinomethionat, Chloroneb, Chlozolinate, Cymoxanil, Dazomet, Didomezine, Dichloram, Diethofencarb, Dimethirimol, Diocab, Dithianon, Dodine, Drazoxolon, Edifenphos, Ethirimol, Etridiazole, Fenarimol, Fenitropan, Fentin acetate, Fentin Hydroxide, Ferimzone, Fluazinam, Fluromide, Flusulfamide, Flutriafol, Fosetyl, Fthalide, Furalaxyl, Guazatine, Hymexazol, Iprobenfos, Iprodione, Isoprothiolane, Metalaxyl, Methasulfocarb, Nitrothal-isopropyl, Nuarimol, Ofurace, Oxadiyl, Perflurazoate, Pencycuron, Phosdiphen, Pimaricin, Piperalin, Procymidone, Propamocarb, Propineb, Pyrazophos, Pyrifenox, Pyroquilon, Quintozene, Tar Oils, Tecnazene, Thicyofen, Thiophanate-methyl, Tolclofos-methyl, Triazoxide, Trichlamide, Tricyclazole, Triforine, Vinclozolin.

### Insektizide:

Phosphorsäureester wie Azinphos-ethyl, Azinphos-methyl, α-1(4-Chlorphenyl)-4-(O-ethyl, S-propyl)phosphoryloxy-pyrazol, Chlorpyrifos, Coumaphos, Demeton, Demeton-S-methyl, Diazinon, Dichlorvos, Dimethoate, Ethoate, Ethoprophos, Etrimfos, Fenitrothion, Fenthion, Heptenophas, Parathion, Parathion-methyl, Phosalone, Phoxim, Pirimiphos-ethyl, Pirimiphos-methyl, Profenofos, Prothiofos, Sulfprofos, Triazophos und Trichlorphon;
Carbamate wie Aldicarb, Bendiocarb, a-2-(1-Methylpropyl)-phenylmethylcarbamat, Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb;
Organosiliciumverbindungen, vorzugsweise Dimethyl(phenyl)silyl-methyl-3-phenoxybenzylether wie Dimethyl-(4-ethoxyphenyl)-silylmethyl-3-phenoxybenzylether oder
(Dimethylphenyl)-silyl-methyl-2-phenoxy-6-pyridylmethylether wie z.B. Dimethyl-(9-ethoxy-phenyl)-silylmethyl-2-phenoxy-6-pyridylmethylether oder [(Phenyl)-3-(3-phenoxyphenyl)-propyl](dimethyl)-silane wie z.B. (4-Ethoxyphenyl)-[3-(4-fluoro-3-phenoxyphenyl-propyl]dimethyl-silan, Silafluofen;
Pyrethroide wie Allethrin, Alphamethrin, Bioresmethrin, Byfenthrin, Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluor-methylvinyl)cyclopropancarboxylat, Fenpropathrin, Fenfluthrin, Fenvalerate, Flucythrinate, Flumethrin, Fluvalinate, Permethrin, Resmethrin und Tralomethrin;
Nitroimine und Nitromethylene wie 1-[(6-Chlor-3-pyridinyl)-methyl]-4,5-dihydro-N-nitro-1H-imidazol-2-amin (Imidacloprid), N-[(6-Chlor-3-pyridyl)methyl-]N²-cyano-N¹-methylacetamide (NI-25);
Abamectin, AC 303, 630, Acephate, Acrinathrin, Alanycarb, Aldoxycarb, Aldrin, Amitraz, Azamethiphos, Bacillus thuringiensis, Phosmet, Phosphamidon, Phosphine, Prallethrin, Propaphos, Propetamphos, Prothoate, Pyraclofos, Pyrethrins, Pyridaben, Pyridafenthion, Pyriproxyfen, Quinalphos, RH-7988, Rotenone, Sodium fluoride, Sodium hexafluorosilicate, Sulfotep, Sulfuryl fluoride, Tar Oils, Teflubenzuron, Tefluthrin, Temephos, Terbufos, Tetrachlorvinphos, Tetramethrin, O-2-tert.-Butyl-pyrimidin-5-yl-o-isopropyl-phosphorothiate, Thiocyclam, Thiofanox, Thiometon, Tralomethrin, Triflumuron, Trimethacarb, Vamidothion, Verticillium Lacanii, XMC, Xylylcarb, Benfuracarb, Bensultap, Bifenthrin, Bioallethrin, MERbioallethrin (S)-cyclopentenyl isomer, Bromophos, Bromophos-ethyl, Buprofezin, Cadusafos, Calcium Polysulfide, Carbophenothion, Cartap, Chinomethionat, Chlordane, Chlorfenvinphos, Chlorfluazuron, Chlormephos, Chloropicrin, Chlorpyrifos, Cyanophos, Beta-Cyfluthrin, Alpha-cypermethrin, Cyophenothrin, Cyromazine, Dazomet, DDT, Demeton-S-methylsulphon, Diafenthiuron, Dialifos, Dicrotophos, Diflubenzuron, Dinoseb, Deoxabenzofos, Diaxacarb, Disulfoton, DNOC, Empenthrin, Endosulfan, EPN, Esfenvalerate, Ethiofencarb, Ethion, Etofenprox, Fenobucarb, Fenoxycarb, Fensulfothion, Fipronil, Flucycloxuron, Flufenprox, Flufenoxuron, Fonofos, Formetanate, Formothion, Fosmethilan, Furathiocarb, Heptachlor, Hexaflumuron, Hydramethylnon, Hydrogen Cyanide, Hydroprene, IPSP, Isazofos, Isofenphos, Isoprothiolane, Isoxathion, Iodfenphos, Kadethrin, Lindane, Malathion, Mecarbam, Mephosfolan, Mercurous, chloride, Metam, Metarthizium, anisopliae, Methacrifos, Methamidophos, Methidathion, Methiocarb, Methoprene, Methoxychlor, Methyl isothiocyanate, Metholcarb, Mevinphos, Monocrotophos, Naled, Neodiprion sertifer NPV, Nicotine, Omethoate, Oxydemeton-methyl, Pentachlorophenol, Petroleum oils, Phenothrin, Phenthoate, Phorate;

### Molluscicides:

Fentinacetate, Metaldehyde, Methiocarb. Niclosamide, Thiodicarb, Trimethacarb;

### Algicide:

Dichlororphen, Endothal, Fentinacetate, Quinoclamine;

### Herbicides:

Diuron, Dichlorophen, Endothal, Fentinacet, Quinochlamine.

Als Biozide eignen sich vorzugsweise Algizide wie Diuron, Dichlorophen, Endothal, Fentinacetat, Quinoclamine, Molluscicide wie Fentinacetat, Metaldehyd, Methiocarb, Niclosamid, Thiodicarb und Trimethacarb, Fungizide wie Dichlofluanid, Tolylfluanid, Iodpropargylbutylcarbamat, Fluorfolpet und Azole wie Tebuconazole oder herkömmliche Antifoulingwirkstoffe wie 2-(N,N-Dimethylthiocarbamoylthio)-5-nitrothiazyl, Tetrabutyldistannoxan, 2-tert.-Butylamino-4-cyclopropylamino-6-methylthio-1,3,5-triazin, 4,5-Dichloro-2-n-octyl-4-isothiazolin-3-on, 2,4,5,6-Tetrachloroisophthalodinitril, Tetramethylthiuramdisulfid, 2,4,6-Trichlorphenylmaleinimid, 2,3,5,6-Tetrachlor-4-(methylsulfonyl)-pyridin, Diiodmethylparatrylsulfon, Thiabendazol, Tetraphenylboronpyridinsalz, Natriumsalz von 2-Pyridinthiol-1-oxid.

Erfindungsgemäß bevorzugte Biozide sind auch Benzothiophen-2-carboxamid-S,S-dioxide der Formel (I) 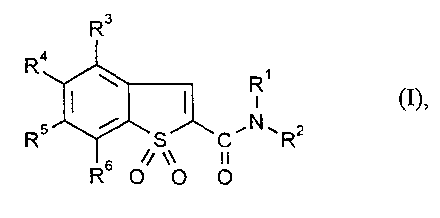 in welcher
- R¹: für gegebenenfalls substituiertes Alkyl, für Alkenyl oder Alkinyl, für jeweils gegebenenfalls substituiertes Cycloalkyl oder Cycloalkylalkyl, oder für jeweils gegebenenfalls substituiertes Aralkyl, Aralkenyl, Aralkinyl oder Aryl steht,
- R²: für Wasserstoff oder für gegebenenfalls substituiertes Alkyl steht oder
- R¹ und R²: gemeinsam mit dem Stickstoffatom an welches sie gebunden sind für einen gegebenenfalls substituierten Heterocyclus stehen und
- R³, R⁴, R⁵ und R⁶: unabhängig voneinander jeweils für Wasserstoff, Halogen, Cyano, Nitro, Alkyl, Alkoxy, Alkylthio, Halogenalkyl, Halogenalkoxy oder Halogenalkylthio stehen, insbesondere die Verbindung N-Cyclohexylbenzothiophen-2-carboxamid-S,S-dioxid.

Besonders gute Wirkungen werden auch mit Wirkstoffkombinationen vorzugsweise der genannten Biozide erzielt.

Besonders bevorzugt sind diejenigen Biozide die abbaubar sind.

Unter abbaubar im Sinne der Erfindung werden solche Biozide verstanden, die im Meerwasser bei 25°C eine Halbwertszeit von weniger 180 Tagen, vorzugsweise weniger als 90 Tagen aufweisen. Der Mechanismus der Abbaureaktion ist für den erfinderischen Effekt nicht entscheidend. Es kann ein chemischer Abbau durch z.B. Hydrolyse oder Oxidation, ein photochemischer Abbau oder ein biologischer Abbau durch Microorganismen sein.

Beispiele für geeignete abbaubare Biozide finden sich beispielsweise in der Gruppe der Phenoxiessigsäuren, Harnstoffe, Thioharnstoffe, Thiocarbamate, Sulfamide und Halogenaromaten.

### Bevorzugte Wirkstoffe sind:

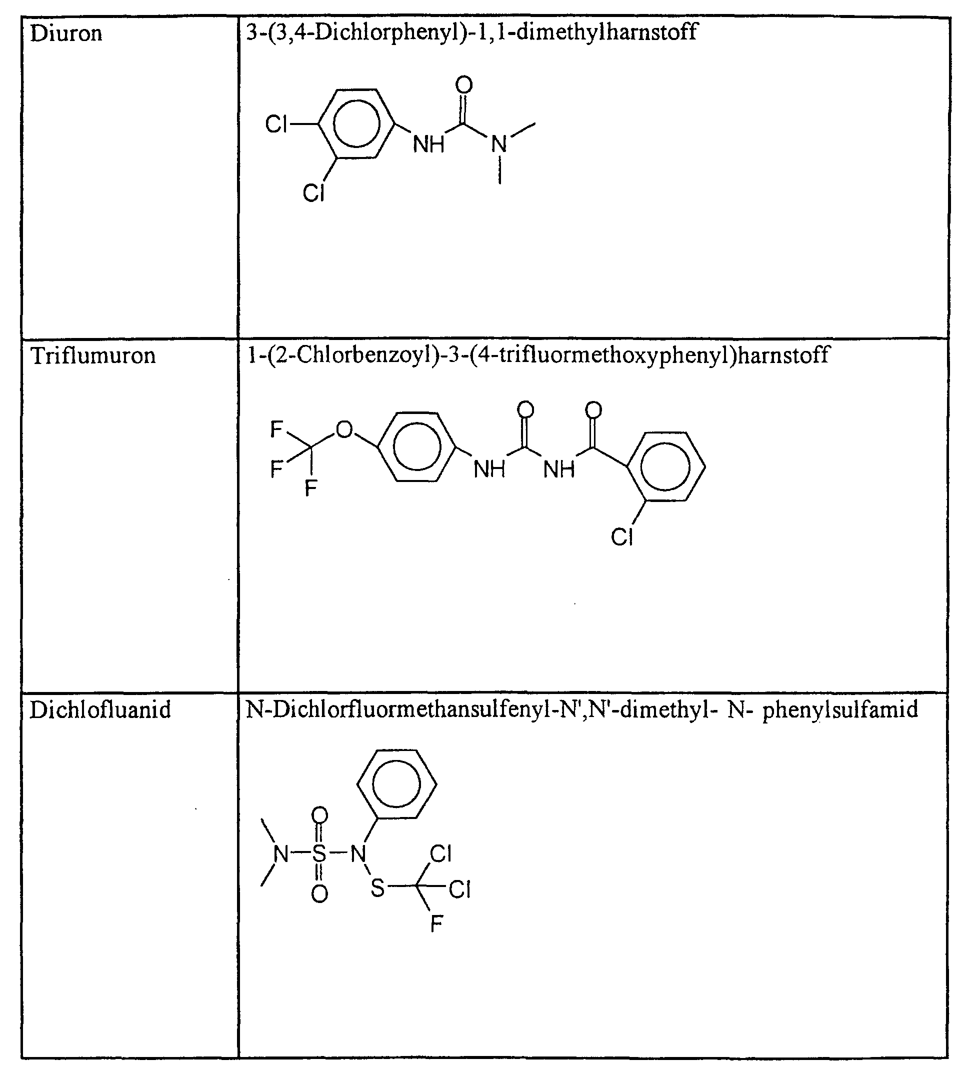

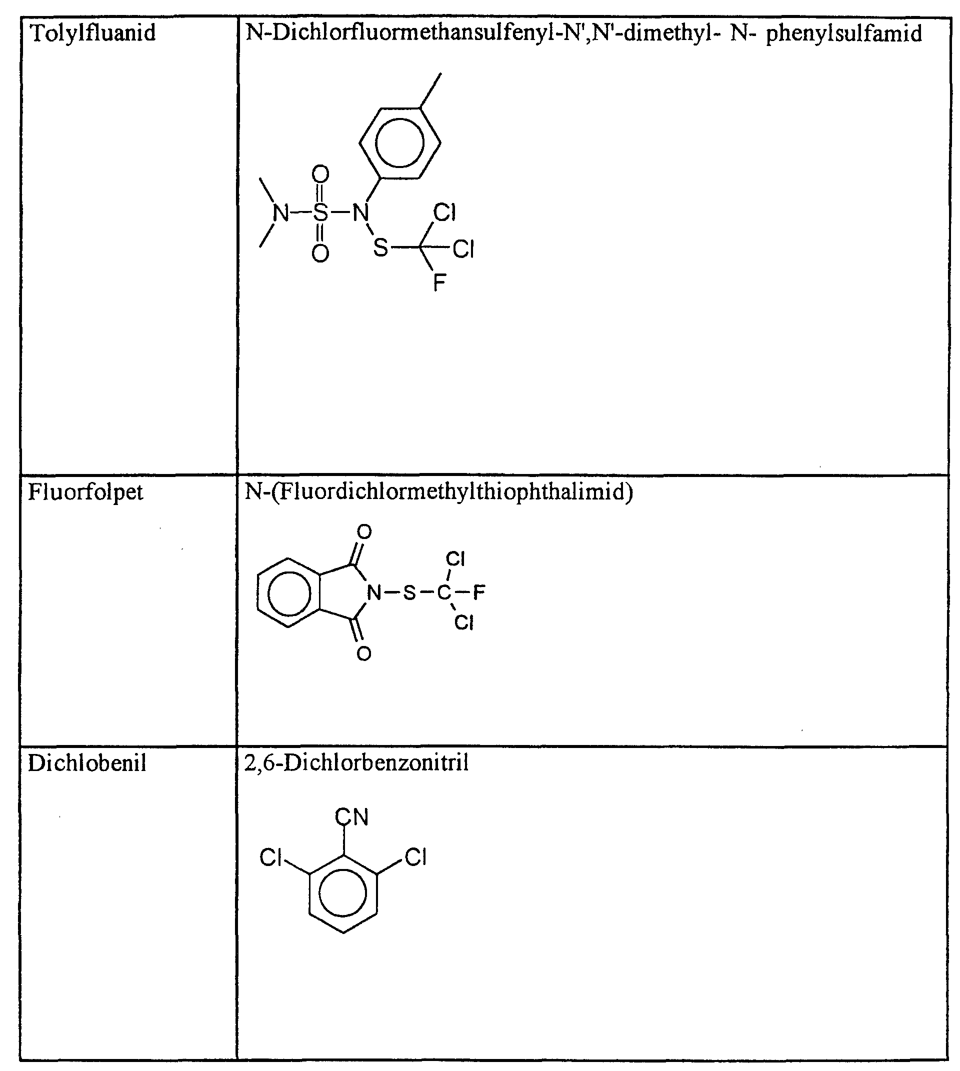

Für die Mikroverkapselung der Biozide kommen die für diesen Einsatzzweck bekannten Materialien, insbesondere Polymere in Frage. Geeignete Polymere sind beispielsweise Polyester, natürliche und synthetische Polyamide, Melaminharze, Polyurethane, Polyharnstoffe, Polysiloxane, Poly(meth)acrylate sowie Copolymerisate aus (Meth)acrylsäure und (Meth)acrylsäureester. In vielen Fällen ist es vorteilhaft vernetzte Polymere anzuwenden. Als natürliches Polyamid ist Gelatine besonders gut geeignet. Diese kommt insbesondere als Koazervat und Komplexkoazervat zur Anwendung. Unter gelatinehaltigen Kompexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von z.B. Maleinsäure, Acrylsäure, Methacrylsäure, Acrylamid und Methacrylamid. Gelatinehaltige Kapseln können mit üblichen Härtungsmitteln wie z.B. Formaldehyd oder Glutardialdehyd vernetzt werden.

Das mikroverkapselte Biozid kann in der Weise vorliegen, daß ein einzelnes Biozidteilchen von einer Polymerhülle umschlossen wird. Es kann aber auch ein Polymerpartikel vorliegen, in dem eine Vielzahl von Biozidteilchen eingeschlossen sind oder das Biozid molekulardispers vorliegt. Die Mikroverkapselung isolierter Biozidteilchen kann durch bekannte Methoden erfolgen zum Beispiel durch Aufbringen eines fertigen Polymeren aus Lösung durch Ausfällen des Polymers oder Verdampfen des Lösungsmittels. Es ist auch möglich das Polymer durch Aufbaureaktionen, wie Polymerisation, Polyaddition oder Polykondensation auf der Oberfläche des Biozidteilchens zu erzeugen.

Die Herstellung von Polymerpartikel, die eine Vielzahl von Biozidteilchen eingeschlossen enthalten, kann z.B. durch Schmelzencompoundierung und anschließende Zerkleinerung erfolgen. Ein weiteres gut geeignetes Verfahren zur Herstellung von biozidhaltigen Polymerpartikeln ist die Perlpolymerisation Bei diesem Verfahren werden flüssige Mischungen aus Monomeren und Biozid zu kleinen Tröpfchen zerteilt und ausgehärtet, wobei kugelförmige Partikel erhalten werden, in denen der Wirkstoff eingeschlossen ist. Zur Herstellung biozidhaltiger Perlpolymerisate sind beispielsweise die folgenden monofunktionellen Monomere und multifunktionellen Monomere, die in der Regel als Vernetzer wirken, geeignet: Styrol, Vinyltoluol, Chlorstyrol, Chlormethylstyrol, Acrylsäure, Methacrylsäure, Acrylsäurester, Methacrylsäureester, Acrylnitril, Methacrylnitil, Acrylamid, Methacrylamid, Vinylchlorid, Vinylidenchlorid, Vinylacetat, Divinylbenzol, Diethylenglycoldivinylether, Octadien-1,7, Hexadien-1,5, Ethylenglycoldimethacrylat, Triethylenglycoldimethacrylat, Trimethylolpropan-trimethachrylat und Allylmethacrylat.

Es wurde gefunden, daß Antifoulingbeschichtungen mit wirkstoffhaltigen Perlpolymerisaten hohe Füllgrade erlauben und sehr gute Verarbeitungseigenschaften aufweisen.

Die mittlere Teilchengröße der mikroverkapselten Biozide beträgt 0.1 bis 200 µm, vorzugsweise 0.2 bis 20 µm.

Der Anteil der mikroverkapselten Biozide beträgt 1 bis 50, vorzugsweise 2 bis 40 Gew.-%, bezogen auf die Antifoulingbeschichtung.

Als Bindemittel sind die für Beschichtungen bekannten filmbildenden Bindemittel geeignet. Beispielhaft seien genannt: Polyester, Polyacrylate, Polyurethane, Polyamide, chlorierte Kautschuke, Polyvinylchlorid und Polysiloxane. Gut geeignet sind auch sog. 2-K-Systeme, bei denen das Bindemittel aus zwei Reäktivkomponeten in der Beschichtung erzeugt wird. Bevorzugte 2-K-Systeme sind z.B. Polyurethane aus einem Polyester- oder Polyetherdiol und einem Diisocyanat. Durch den Einbau von Polysiloxaneinheiten in z.B. ein Polyetherdiol lassen sich Polyurethane mit Antihafteigenschaften erzeugen. Bindemittel, die überwiegend aus Polysiloxaneinheiten bestehen, sind sowohl als kondensationsvernetzende 1K-Systeme als auch als additionsvernetzende 2K-Systeme verfügbar. Die Bindemittel können aus organischen Lösungsmitteln oder als wäßriger Dispersion verarbeitet werden. Geeignete organische Lösungsmittel sind z.B. aliphatische Kohlenwasserstoffe, insbesondere Benzinfraktionen, aromatische Kohlenwasserstoffe, Halogenkohlenwasserstoffe, Alkohole, Ketone, Ester und Ether.

Die erfindungsgemäß hergestellten Antifoulingbeschichtungsmittel enthalten neben den mikroverkapselten schwermetallfreien Bioziden im allgemeinen neben den Bindemitteln noch gegebenenfalls übliche Hilfsmittel wie z.B. Füllstoffe, Lösungsmittel, Weichmacher, Farbstoffe, Pigmente, Katalysatoren, Inhibitoren, Haftmittel, Lackadditive und/oder gängige Dispergier- bzw. Formulierhilfsmittel. Selbstverständlich können neben den schwermetallfreien Bioziden auch noch schwermetallhaltige Biozide N-(Cyclo-hexyldiazeniumdioxy)-tributylzinn Bis-N-(cyclohexyldiazeniumdioxy)-kupfer; Metallseifen wie Zinn-, Kupfer-, Zinknaphtenat, -octoat, 2-ethylhexanoat, -oleat, -phosphat, -benzoat, Metallsalze wie Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat, Kupfersalz von 2-Pyridinthiol-1-oxid; Oxide 0wie Tributylzinnoxid, Cu₂O, CuO, ZnO; Ag, Zn oder Cu-haltige Zeolithe allein oder eingeschlossen in polymere Wirkstoffe enthalten sein, wobei dann allerdings der ökologische Vorteil eingeschränkt wird.

Die nachfolgenden Beispiele dienen zur Verdeutlichung der Erfindung. Die Erfindung ist nicht auf die Beispiele limitiert.

### Beispiel 1

### Mikroverkapselung von Diuron (Umhüllung)

In einer Perlmühle wurden
- 12 g: Diuron,
- 0.06 g: Dispergierhilfsmittel (Baykanol SI, Bayer AG),
- 48 g: einer 5%-igen, wäßrigen alkalischen Lösung eines Terpolymerisats aus 24 Gew.-% Methacrylsäure, 36 Gew.-% Methylmethacrylat und 40 Gew.-% Butylacrylat und
- 10 g: Wasser
eingewogen. Die Mischung wurde 20 h geschüttelt, wobei die Diuronpartikel auf eine Größe von 0.5 bis 1.0 µm zerkleinert wurden. Anschließend wurde mit 15 ml In-HCl angesäuert, 1 h auf 60°C erhitzt, der Feststoff abfiltriert, mit 30 ml Wasser gewaschen und bei 60°C im Vakuum getrocknet. Man erhielt 14.2 g microverkapseltes Diuron.

### Beispiel 2

### Mikroverkapselung von Diuron (Perlpolymerisation)

In einer Kugelmühle wurden 100 g Diuron, 30 g hochdisperse Kieselsäure (HDK H 2000, Wacker Chemie GmbH), 285 g Methylmethacrylat und 15 g Ethylenglycoldimethacrylat 10 h lang bei Raumtemperatur intensiv durchmischt. Anschließend wurden 3 g Dibenzoylperoxid zugesetzt und die erhaltene Mischung in einem 31-Rührreaktor, der 1.5 1 einer 1%igen wäßrigen alkalischen Lösung (mit NaOH auf pH 0,8 eingestellt) eines Copolymerisates aus 50 Gew.-% Methacrylsäure und 50 Gew.-% Methylmethacrylat enthielt, überführt. Die Rührgeschwindigkeit wurde auf 600 rpm eingestellt und die Temperatur 2 h bei 78°C und dann 1 h bei 85°C gehalten. Nach dem Abkühlen wurde der erhaltene Feststoff durch Dekantieren isoliert, mehrfach mit Wasser gewaschen und bei 80°C 12 h lang getrocknet. Man erhielt 385 g microverkapseltes Diuron in Form von Perlpolymerisaten mit einer mittleren Teilchengröße von 15 µm.

### Beispiel 3

### Mikroverkapselung von Alsystin (Umhüllung)

Beispiel 1 wurde wiederholt, wobei anstelle von Diuron Alsystin eingesetzt wurde. Man erhielt 13.5 g microverkapseltes Alsystin.

### Beispiel 4

### Erfindungsgemäße Beschichtung (Polyvinylacetat)

40 g Polyvinylacetat (Movilith 50, Hoechst AG) wurden in 120 ml Toluol gelöst. In diese Lösung wurden 40 g microverkapseltes Diuron aus Beispiel 3 mit Hilfe eines Schnellrührers dispergiert. Die Dispersion wurde mit Hilfe einer Rakel mit einer Naßfilmdicke von 250 µm auf eine mit Epoxidlack beschichtete Metallplatte aufgetragen. Die Beschichtung wird 10 h bei 60°C getrocknet. Man erhielt eine homogene Beschichtung mit einer Schichtdicke von ca. 100 µm

### Beispiel 5

### Erfindungsgemäße Beschichtung (Siliconharz)

11.67 g einer Siliconharzlösung mit einer Viskosität von 3000 mPas enthaltend 77,1% Methylsiliconharz der prozentualen Zusammensetzung T_{89.3}D₉M_{1.7} im Lacklösemittel IsoparG wurden mit weiteren 4 g Lacklösemittel IsoparG verdünnt. In diese Lösung wurden 0,5 g microverkapseltes Diuron aus Beispiel 1 und 0,5 g microverkapseltes Alsystin aus Beispiel 3 mit Hilfe eines Schnellrührers dispergiert. Die Dispersion wurde mit Hilfe einer Rakel mit einer Naßfilmdicke von 250 µm auf eine mit Epoxidlack beschichtete Metallplatte aufgetragen. Die Beschichtung wurde 10 h bei 60°C getrocknet. Man erhielt eine homogene Beschichtung mit einer Schichtdicke von ca. 150 µm.

### Beispiel 6

### Vergleichsbeispiel (nicht erfindungsgemäß)

Beispiel 4 wurde wiederholt, wobei anstelle von 40 g microverkapseltem Diuron aus Beispiel 3 (welches 83,33% Wirkstoff enthält) 33,3 g fein gemahlenes nicht microverkapseltes Diuron eingesetzt wurde. Man erhielt eine Beschichtung mit einer Schichtdicke von ca. 100 µm. Die Beschichtung war nicht homogen. Es waren Wirkstoff-Partikel bzw. Wirkstoff-Agglomerate mit dem "unbewaffneten Auge" sichtbar. Die Oberfläche der Beschichtung war rau.

### Beispiel 7

### Anwendungstest zur Prüfung der Anheftung von benthischen Kieselalgen (Nitzschia usilla) an erfindungsgemäße Beschichtungen

- Testorganismus:: Kieselalge Nitzschia (benthischen Kieselalge)
- Medium:: ASW-Medium
- Kulturgefäße:: Erlenmeyer-Kulturkolben
- Testbedingungen:: T: 18°C, künstliches Dauerlicht, permanente Bewegung auf einem Taumelschüttler, ohne Zusatzlüftung.
- Auswertung:: Vergleich der erfindungsgemäßen Beschichtungen bezüglich Bewuchs mit Vergleichsbeispiel 10 und einer mit Epoxidlack beschichteten Metallplatte. Der Grad des Bewuchses wird folgendermaßen gekennzeichnet:
+++ : gleichmäßig starker Bewuchs
++ : geringer Bewuchs
+ : ganz geringer Bewuchs
- : kein Bewuchs

| Beispiel | | Bewuchs nach 14 Tagen |
|---|---|---|
| 7 A | 14 Tage Exposition der erfindungsgemäßen Beschichtung aus Beispiel 5 unter o.g. Testbedingungen | - |
| 7 B | mit Epoxidlack beschichtete Metallplatte, | +++ |
| Vergleich | Exposition wie bei 7 A | |

### Ergebnis der Anwendungsbeispiele:

Die erfindungsgemäße Beschichtung aus Beispiel 5 zeigte unter den angegebenen Testbedingungen keinen Bewuchs (-).

Eine mit einem Epoxidlack beschichtete Metallplatte zeigte dagegen in Beispiel 7 B einen gleichmäßig starken Bewuchs (+++).

## Patentansprüche

1. Verfahren zur Herstellung von Antifoulingmitteln, **dadurch gekennzeichnet, dass** die durch Perlpolymerisation erhaltenen mikroverkapselten, schwermetallfreien Biozide mit Filmbildnern dispergiert werden und gegebenenfalls mit üblichen Hilfsmitteln versetzt werden.

2. Verfahren nach Anspruch 1, **dadurch gekennzeichnet, dass** die Biozide in Poly(meth)acrylaten oder Copolymerisaten aus (Meth)acrylsäure und Meth(acrylsäureester) mikroverkapselt sind.

3. Verfahren nach Anspruch 1, **dadurch gekennzeichnet, dass** die mittlere Teilchengröße der mikroverkapselten, schwermetallfreien Biozide 0,2 bis 20 Mikrometer beträgt.

4. Verfahren nach Anspruch 1, **dadurch gekennzeichnet, dass** der Anteil der mikroverkapselten, schwermetallfreien Biozide 2 bis 40 Gew.-%, bezogen auf die Antifoulingbeschichtung, beträgt.

5. Antifoulingmittel, erhältlich nach dem Verfahren nach Anspruch 1.

6. Antifoulingmittel nach Anspruch 5, **dadurch gekennzeichnet, dass** die mikroverkapselten, schwermetallfreien Biozide im Meerwasser abbaubar sind.

7. Antifoulingmittel nach Anspruch 5, **dadurch gekennzeichnet, dass** die mikroverkapselten, schwermetallfreien Biozide zu der Gruppe der Phenoxyessigsäuren, Harnstoffe, Thioharnstoffe, Thiocarbamate, Sulfamide oder Halogenaromaten gehören.

8. Antifoulingmittel nach Anspruch 5, **dadurch gekennzeichnet, dass** das mikroverkapselte, schwermetallfreie Biozid Diuron, Triflumuron, Dichlofluanid, Tolylfluanid, Fluorfolpet oder Dichlobenil ist.

9. Antifoulingmittel, nach Anspruch 5, **dadurch gekennzeichnet, dass** die mikroverkapselten, schwermetallfreien Biozide im Meerwasser bei 25 °C eine Halbwertszeit von weniger als 180 Tagen aufweisen.

10. Verwendung der Antifoulingmittel nach Anspruch 5, zur Beschichtung von Gegenständen, die mit Meerwasser in Kontakt kommen.

## Claims

1. Process for preparing antifouling agents, **characterised in that** the microencapsulated, heavy-metal free biocides obtained by bead polymerisation are dispersed using film formers and optionally conventional auxiliary agents are added thereto.

2. Process according to claim 1, **characterised in that** the biocides are microencapsulated in poly(meth)acrylates or in copolymers consisting of (meth)acrylic acid and (meth)acrylic ester.

3. Process according to claim 1, **characterised in that** the average particle size of the microencapsulated, heavy-metal free biocides is 0.2 to 20 micrometres.

4. Process according to claim 1, **characterised in that** the content of microencapsulated, heavy-metal free biocides is 2 to 40 wt.%, based on the antifouling coating.

5. Antifouling agent, obtainable by the process according to claim 1.

6. Antifouling agent according to claim 5, **characterised in that** the microencapsulated, heavy-metal free biocides are degradable in sea water.

7. Antifouling agent according to claim 5, **characterised in that** the microencapsulated, heavy-metal free biocides are phenoxyacetic acids, ureas, thioureas, thiocarbamates, sulfamides or halogenated aromatics.

8. Antifouling agent according to claim 5, **characterised in that** the microencapsulated, heavy-metal free biocide is diuron, triflumuron, dichlofluanid, tolylfluanid, fluorfolpet or dichlobenil.

9. Antifouling agent according to claim 5, **characterised in that** the microencapsulated, heavy-metal free biocides have a half-life of less than 180 days in sea water at 25°C.

10. Use of the antifouling agent according to claim 5 for the coating of objects which come into contact with sea water.

## Revendications

1. Procédé de préparation d'agents antisalissure, **caractérisé en ce que** l'on disperse les biocides exempts de métaux lourds, microencapsulés, obtenus par polymérisation en perles, avec un agent filmogène et le cas échéant, on ajoute les auxiliaires usuels.

2. Procédé suivant la revendication 1, **caractérisé en ce que** les biocides sont microencapsulés dans un poly(méth)acrylate ou un copolymère d'acide (méth)acrylique et d'ester d'acide (méth)acrylique.

3. Procédé suivant la revendication 1, **caractérisé en ce que** la taille moyenne des particules de biocide exempt de métaux lourds, microencapsulé, se situe dans l'intervalle allant de 0,2 à 20 µm.

4. Procédé suivant la revendication 1, **caractérisé en ce que** la quantité du biocide exempt de métaux lourds, microencapsulé, se situe dans l'intervalle allant de 2 à 40% en poids, sur base de l'enduit antisalissure.

5. Agent antisalissure, obtenu par le procédé suivant la revendication 1.

6. Agent antisalissure suivant la revendication 5, **caractérisé en ce que** les biocides exempts de métaux lourds, microencapsulés, sont dégradables dans l'eau de mer.

7. Agent antisalissure suivant la revendication 5, **caractérisé en ce que** les biocides exempts de métaux lourds, microencapsulés, appartiennent au groupe des acides phénoxyacétiques, des urées, des thiourées, des thiocarbamates, des sulfamides ou des halogénoaromatiques.

8. Agent antisalissure suivant la revendication 5, **caractérisé en ce que** le biocide exempt de métaux lourds, microencapsulé est le diuron, le triflumuron, le dichlofluanide, le tolylfluanide, le fluorfolpet ou le dichlobénil.

9. Agent antisalissure suivant la revendication 5, **caractérisé en ce que** les biocides exempts de métaux lourds, microencapsulés présentent dans l'eau de mer à 25°C, un temps de demi-vie inférieur à 180 jours.

10. Utilisation de l'agent antisalissure suivant la revendication 5, pour l'enduction d'objets, qui entrent en contact avec l'eau de mer.
